# EUROPEAN PATENT APPLICATION

(11) **EP 1 580 461 A2**
(43) Date of publication of application: **28.09.2005**
(21) Application number: 05006345.2
(22) Date of filing: 23.03.2005
(51) Int. Cl.: F16H 59/10

(54) **A selector apparatus of an automatic transmission of vehicle**

(30) Priority: 25.03.2004 JP 2004089723
(71) Applicant: KABUSHIKI KAISHA ATSUMITEC, Shizuoka-ken (JP)
(72) Inventor: Suzuki, Takayuki, Hamana-gun Shizuoka-ken (JP); Oda, Shigeaki, Hamana-gun Shizuoka-ken (JP)
(74) Representative: Cohausz & Florack

(57) **Abstract**

A selector apparatus of an automatic transmission of vehicle which can suppress backlash of teeth of the gear arrangement of the lever bracket and the select-link to improve good operability of the selector lever by urging the select-link along its pivotal axis so that the teeth of the select-link are urged on to the teeth of the lever bracket. According to the present invention, there is provided selector apparatus of an automatic transmission of vehicle comprising: brackets 1a and 1b to be secured on a body of vehicle; a selector lever 2 pivotally supported on the brackets 1a and 1b; a lever bracket 3 arranged at a base end of the selector lever 2 and formed with sector gear teeth 3a; and a selector-link 4 for actuating a transmission via a wire W interposed between the selector-link 4 and the transmission formed with sector gear teeth 4a mating with the sector gear teeth 3a of the lever bracket 3 and rotated by the pivotal motion of the selector lever 2 characterized in that: tooth surfaces of the teeth 3a and 4a of the lever bracket 3 and the select-link 4 are tapered, and there is provided an urging means 7, 8 and 9 for urging the select-link 4 along its pivotal axis so that the teeth 4a of the select-link 4 are urged on to the teeth 3a of the lever bracket 3.

## Description

### Field of the Invention

The present invention relates to a selector apparatus of an automatic transmission of vehicle for carrying out the shifting operation of the transmission by transmitting the pivotal motion of the selector lever to a select-link via a gear arrangement.

### Description of Background Art

In general, a selector apparatus having a selector lever operated by a driver is provided on a vehicle having an automatic transmission and the selector lever can be pivotally moved, for example, to a parking position (P), a reverse position (R), a neutral position (N) and a drive position (D). The base end of the selector lever is provided with a lever bracket which has an aperture for pivotal shaft of the selector lever and is connected to the automatic transmission via a push-pull wire.

Various structures of the selector apparatus have been required to be adapted to many limitations in layout in the interior of vehicle for satisfying desires of users. Accordingly, in Japanese Laid-open Patent Publication No. 315070/1995 there is proposed a selector apparatus provided with a gear arrangement for corresponding the shifting direction of the selector lever and the moving direction of the push-pull wire.

In the selector apparatus of the prior art, a lever bracket is formed with teeth of a sector gear and a select-link is also provided with a sector gear having teeth mating with that of the sector gear of the lever bracket. The select-link is pivotally mounted on a bracket similarly to the selector lever and connected by a push-pull wire extending to an automatic transmission. The transmission can be actuated by a driver operating the selector lever via the sector gear arrangement and the push-pull wire.

However, there is a problem in the selector apparatus of an automatic transmission of vehicle of the prior art in that a large backlash in mesh of teeth of the lever bracket and the select-link and thus the operability of the selector lever is deteriorated.

### SUMMARY OF THE INVENTION

It is, therefore, an object of the present invention to provide a selector apparatus of an automatic transmission of vehicle which can suppress backlash of teeth of the gear arrangement of the lever bracket and the select-link to improve good operability of the selector lever by urging the select-link along its pivotal axis so that the teeth of the select-link are urged on to the teeth of the lever bracket.

For achieving the object above, there is provided, according to the present invention of claim 1, a selector apparatus of an automatic transmission of vehicle comprising: brackets to be secured on a body of vehicle; a selector lever pivotally supported on the brackets; a lever bracket arranged at a base end of the selector lever and formed with sector gear teeth; and a selector-link for actuating a transmission via a wire interposed between the selector-link and the transmission formed with sector gear teeth mating with the sector gear teeth of the lever bracket and rotated by the pivotal motion of the selector lever characterized in that: tooth surfaces of the teeth of the lever bracket and the select-link are tapered, and there is provided an urging means for urging the select-link along its pivotal axis so that the teeth of the select-link are urged on to the teeth of the lever bracket.

It is preferable, as in claim 2, a surface of the select-link against which the urging means abuts is formed with wavy irregularities each corresponding to one position of the selector lever.

### Effects of the invention

According to the invention of claim 1, since the urging means usually urges the select-link toward the lever bracket so that the teeth of the select-link are brought close to the teeth of the lever bracket, it is possible to suppress increase of backlash of teeth of the gear arrangement of the lever bracket and the select-link and thus to improve good operability of the selector lever. Since the teeth both of the lever bracket and the select-link are tapered, they can be urged each other by urging and thus displacing the select-link along its pivotal axis.

According the inventions of claim 2, since a surface of the select-link against which the urging means abuts is formed with wavy irregularities each corresponding to one position of the selector lever, it is possible to provide a driver of vehicle with "shift-click feeling" in pivotal motion of the selector lever. Accordingly this enables to eliminate provision of any additional means for generating "shift-click feeling" in anywhere of the selector apparatus and thus to simplify the structure of the selector apparatus.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a perspective view showing a selector apparatus of an automatic transmission of vehicle of one preferred embodiment of the present invention;
Fig. 2 is a side elevation view of the selector apparatus of Fig. 1 with one of brackets being removed;
Fig. 3 is a cross-sectional view taken along a line III-III of Fig. 2;
Fig. 4 is a schematic view showing a positional relation among a lever bracket, a select-link and an urging means of the selector apparatus.

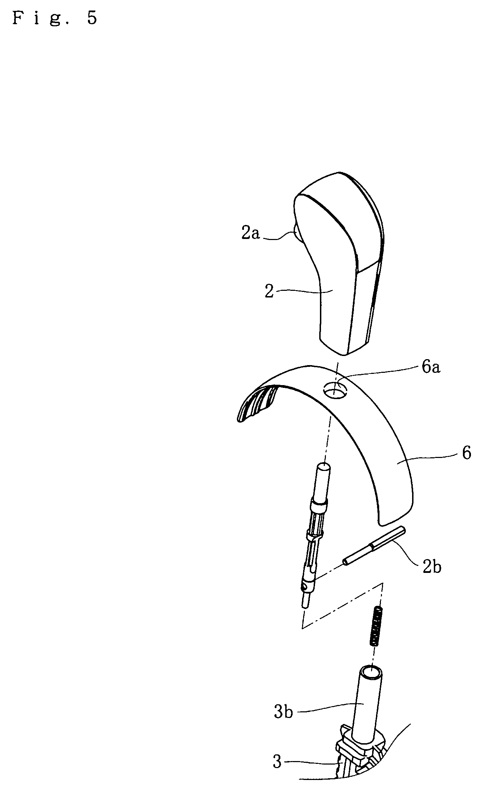

Fig. 5 is an exploded perspective view of the selector apparatus of Fig. 1;

### DESCRIPTION OF THE PREFERRED EMBODIMENTS

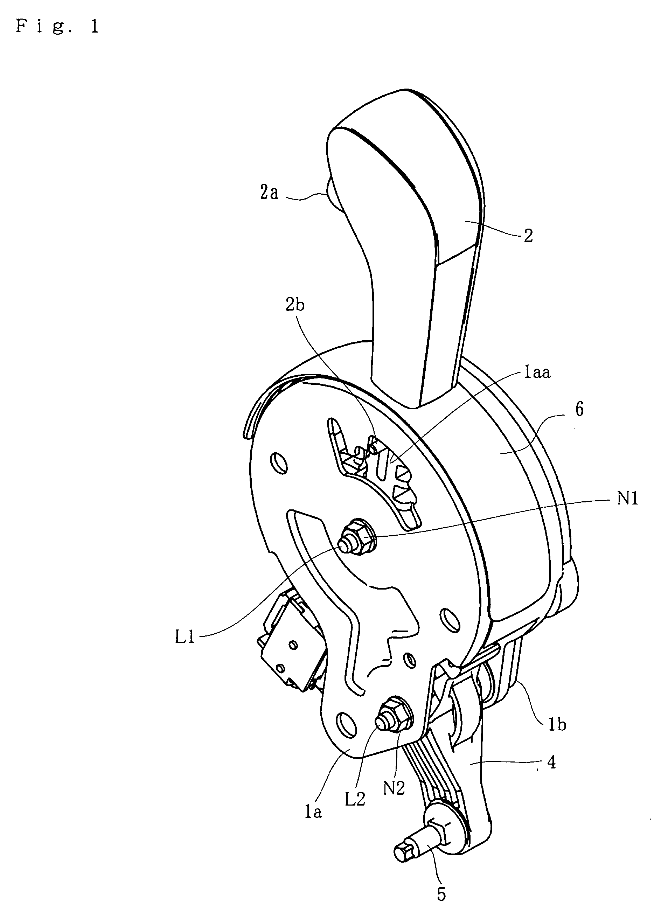

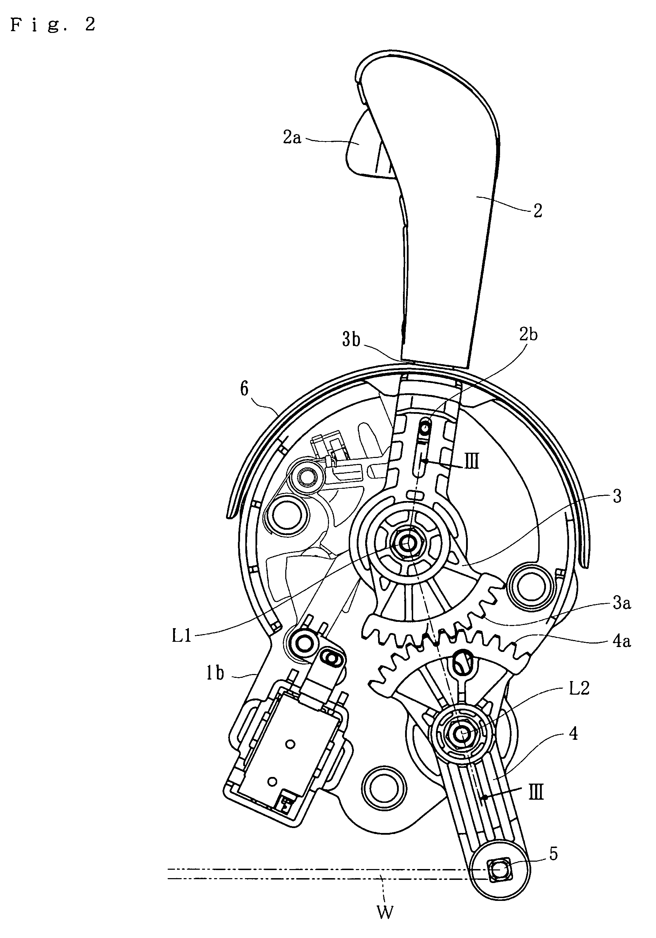

A preferred embodiment of the invention will be described with reference to accompanied drawings.
A selector apparatus of an automatic transmission of vehicle of the present invention is a type which can select any driving position of an automatic transmission by transmitting the pivotal motion of a selector lever to a select-link via sector gears and generally comprises, as shown in Fig. 1, brackets 1a and 1b to be secured on a body of vehicle, a selector lever 2 pivotally supported within the brackets 1a and 1b, a lever bracket 3 (see Fig.2) mounted on the base end of the selector lever 2, and a select-link 4.

The bracket 1a is formed by a metal sheet member and formed with a erroneous operation preventing window 1aa having a configuration according to positions of the selector lever 2 as well as apertures for passing therethrough shafts L1 and L2 respectively of the selector lever 2 and select link 4. The bracket 1a is combined to a bracket 1b to form a box structure of the selector apparatus to be mounted on a body of vehicle.

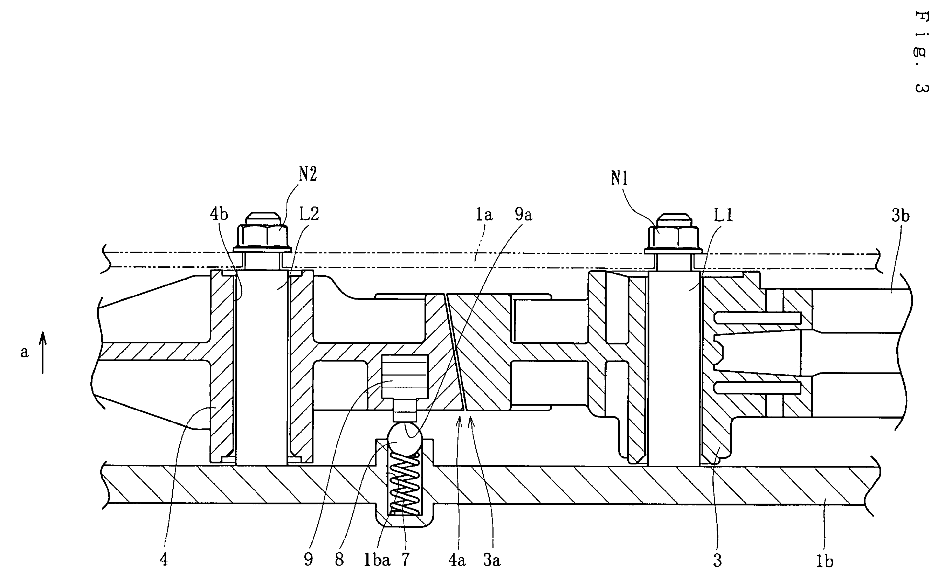

The bracket 1b has a secured shaft L1 and a floating shaft L2 for pivotally supporting the lever bracket 3 and the select-link 4 respectively and is formed with a accommodating bore 1ba (see Fig. 3) opened toward the side of the select-link 4 and accommodated therein a detent spring 7 and a ball 8 as an urging means. Each end of the shafts L1 and L2 is formed with a screw thread on which nuts N1 and N2 are fastened after the lever bracket 3 and a select-link 4 etc. are assembled onto the bracket 1b via the bracket 1a.

The selector lever 2 pivotally operated by a driver of vehicle has a push knob 2a (see Fig. 2) at its top end and is connected, at its bottom end, to the lever bracket 3 via a lever pipe (not shown). A rod lock pin (not shown) is arranged within the lever pipe and a lock pin 2b engaging said erroneous operation preventing window 1aa is passed through the rod lock pin and the lever bracket 3.

When the selector lever 2 is in the parking position (P), the lock pin 2b engages the erroneous operation preventing window 1aa and prevent the selector lever 2 from being shifted toward the reverse position (R). In such a case, if pushing down the push knob 2a, the rod lock pin 7 is moved downward and thus the locking by the lock pin 2b is released. Thus the selector lever 2 is allowed to be pivoted from the parking position (P) to the reverse position (R).

Similarly, pivotal motion of the selector lever 2 is prevented unless the push knob 2a is pushed down in cases of shifting the selector lever 2 from the reverse position (R) to the parking position (P), from the neutral position (N) to the reverse position (R), and from the drive position (D) to the second speed position (2).

The lever bracket 3 is arranged at the bottom end (base end) of the selector lever 2 and is able to pivot around the shaft L1 together with the selector lever 2. The lever bracket 3 is also formed with teeth 3a of a sector gear at a position lower than the shaft L1.

Similarly to the lever bracket 3, the select-link 4 is also pivotable around the shaft L2 and also formed, at its top end, with teeth 4a of a sector gear mating with the teeth 3a of sector gear of the lever bracket 3. The bottom end of the select-link 4 is provided with an end bolt 5 for connecting a push-pull wire W is passed (see Figs. 2). The select-link 4 is formed with a through aperture 4b and is pivotably and slidably mounted on the shaft L2 and thus can slidable a slight distance along the shaft L2 as shown by an arrow "a" in Fig. 3.

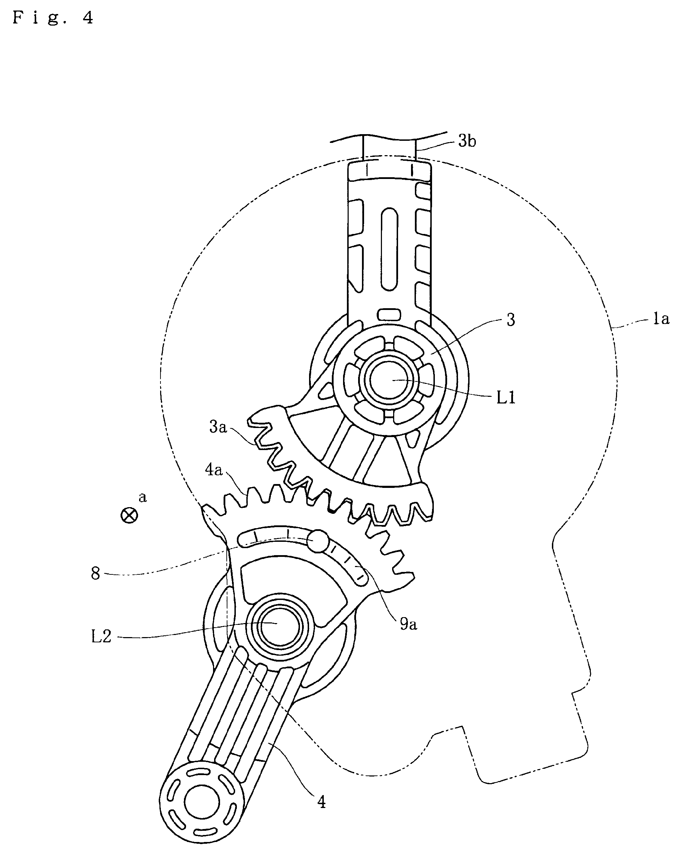

As shown in Fig. 3, the select-link 4 is integrally formed with e.g. by insert method a slide member 9 of wear resisting material having a projected portion projected from the side of the select-link 4. The projected portion of the slide member 9 has a circular arc configuration viewed from its side as shown in Fig. 4 and the surface of the projected portion 9 is formed with wavy irregularities 9a each corresponding to one position of the selector lever 2.

The pivotal motion of the selector lever 2 is transmitted to the select-link 4 via the sector gears thereof and thus the automatic transmission is operated via the push-pull wire W. In this case, the direction of the pivotal motion of the selector lever 2 is same as the moving direction of wire W. A reference numeral 6 in Figs. 1 and 2 denotes a selector lever cover and the cover 6 moves together with the selector lever 2 passed through an aperture 6a formed substantially at the center of the cover 6.

In the selector apparatus of the present invention, the tooth surfaces of the teeth 3a and 4a respectively of the lever bracket 3 and the select-link 4 are tapered as shown in Fig. 3. That is, the teeth 3a and 4a of the lever bracket 3 and the select-link 4 form teeth of so-called a "taper-gear" and thus the tooth surface of the tooth 3a of the lever bracket 3 forms inclined surfaces in a left-right direction viewed in a sheet of Fig. 3 and the tooth surface of the tooth 4a of the select-link 4 forms counter-inclined surfaces in the same direction.

The spring loaded ball 8 urged by the detent spring 7 is adapted to always contact and urge the wavy irregular portion 9a. Since the wavy irregular portion 9a is formed as a circular arc configuration along the pivotal locus of the select-link 4, the ball 8 can be always positioned on the wavy irregular portion 9a.

More particularly, the ball 8 fits into any one recessed portion of the wavy irregularities 9a when the selector lever 2 is positioned at any one of positions (e.g. parking, reverse or drive position etc.) and firmly holds the selector lever 2 at the selected position. During the shift of the selector lever 2 from one position to the other adjacent position, the ball 8 rides over the peak of one wavy irregular portion 9a and then fall down the valley thereof. This provides a driver of vehicle with "shift-click feeling" during the operation of the selector lever 2.

Thus the select-link 4 is always urged toward a direction shown by an arrow "a" in Fig. 3 by the ball 8 urged by the detent spring 7 so that the teeth 4a of the select-link 4 are urged toward the teeth 3a of the lever bracket 3.

Although the select-link 4 is pivotably driven by the selector lever 2 the ball 8 can continue to apply the urging force to the select-link 4 along the wavy irregular portion 9a.

Thus the generation of large backlash between the teeth 3a and 4a of the lever bracket 3 and the select-link 4 is suppressed and the operability of the selector lever 2 can be improved. In addition, since a surface of the select-link 4 against which the ball 8 (urging means) abuts is formed with wavy irregularities 9a each corresponding to one position of the selector lever 2, it is possible to provide a driver of vehicle with "shift-click feeling" in pivotal motion of the selector lever. Accordingly this enables to eliminate provision of any additional means for generating "shift-click feeling" in anywhere of selector apparatus and thus to simplify the structure of the selector apparatus.

Further according to the preferred embodiment of the present invention, since the select-link 4 is moved by the spring loaded ball 8 along its shaft L2 (i.e. toward a direction not giving any influence as to tension to the push-pull wire W), the play of the wire W is not increased and thus deterioration of operability of the selector apparatus can be prevented.

This is because the present invention adopt the tapered gear arrangement and thus the select-link 4 can be moved along its shaft L2 which is a direction not giving any influence as to tension to the push-pull wire W as can be seen from Fig.2.

Although the present invention has been described with reference to the preferred embodiment, the present invention is not limited to this embodiment. For example, additional means for generating "shift-click feeling" may be provided in anywhere of the selector apparatus as same as prior art. In this case the surface with which the spring loaded ball 8 contacts may be changed to a smooth circular surface (e.g. a right side surface of the select-link 4 in Fig. 3) in stead of the wavy irregularities 9.

Furthermore, other urging means (e.g. elastic plastic member or rib, leaf spring etc. extending from the bore 1ba to said side surface of the select-link 4) may be used in place of the detent spring 7 and the ball 8. In addition, although it is shown in the preferred embodiment that the urging means is provided on the bracket 1b, it may be possible to provide it on the bracket 1a. In this case, it is necessary to reverse the direction of the taper of teeth 3a and 4a.

The position at which the urging force is applied may be anywhere of the select-link 4. However, it is preferable to set the position near the teeth 4a in order to effectively transmit the urging force to the teeth 3a and 4a. In addition, the present invention can be applied to those having brackets 1a and 1b or selector lever 2 of different configuration. Of course, the present invention can be also applied to a selector apparatus having any type of parking lock mechanism.

### Applicability in industry

The present invention can be applied to any selector apparatus having a different outline configuration or additional function so long as it has tapered teeth of the lever bracket and the select-link and the urging means applies the urging force to the select-link along its shaft.

## Claims

1. A selector apparatus of an automatic transmission of vehicle comprising:
brackets (1a and 1b) to be secured on a body of vehicle;
a selector lever (2) pivotally supported on the brackets (1a and 1b);
a lever bracket (3) arranged at a base end of the selector lever (2) and formed with sector gear teeth (3a); and
a selector-link (4) for actuating a transmission via a wire (W) interposed between the selector-link (4) and the transmission formed with sector gear teeth (4a) mating with the sector gear teeth (3a) of the lever bracket (3) and rotated by the pivotal motion of the selector lever (2) **characterized in that**:
tooth surfaces of the teeth (3a and 4a) of the lever bracket (3) and the select-link (4) are tapered, and there is provided an urging means (7 and 8) for urging the select-link (4) along its pivotal axis so that the teeth (4a) of the select-link (4) are urged on to the teeth (3a) of the lever bracket (3).

2. A selector apparatus of an automatic transmission of vehicle of claim 1 wherein a surface of the select-link (4) against which the urging means (8) abuts is formed with wavy irregularities (9) each corresponding to one position of the selector lever (2).
